# EUROPEAN PATENT APPLICATION

(11) **EP 4 242 869 A1**
(43) Date of publication of application: **13.09.2023**
(21) Application number: 22818163.2
(22) Date of filing: 24.11.2022
(51) Int. Cl.: G06F 16/29, G09B 29/00, G01C 21/22, G01S 19/42, G08G 5/00

(54) **AERIAL MAP LAYER DISPLAY METHOD AND APPARATUS**

(30) Priority: 27.01.2022 CN 202210099217
(71) Applicant: Guangdong Huitian Aerospace Technology Co., Ltd., Guangzhou, Guangdong 511400 (CN)
(72) Inventor: The designation of the inventor has not yet been filed
(74) Representative: Ran, Handong
(86) International application number: PCT/CN2022/134127
(87) International publication number: WO 2023/142638

(57) **Abstract**

A method and a device for displaying aerial map layers are disclosed, which are applied to an aircraft including a map display interface. The method includes: acquiring flight altitude information of the aircraft and displaying corresponding aerial map layers on the map display interface based on the flight altitude information.

## Description

### Related Application

The present disclosure claims priority of Chinese patent application No. 202210099217.7 filed on January 27, 2022, which is incorporated herein by reference in its entirety.

### Technical Field

The present disclosure relates to the field of aircraft technology, and in particular to a method and a device for displaying aerial map layers.

### Background

Flying automobiles will be the future evolution of transportation. A flying automobile can effectively ease traffic congestion by switching from driving over roads to traveling by air. An aerial map plays an important role in both manned and unmanned driving.

However, since flying automobiles are emerging transportation means, an aerial map that can keep up with the demand of traveling by air is not available yet, especially aerial maps for urban areas with complex environments. At present, unnecessary layer information is loaded during the display of map layers, resulting in significantly low utilization of map information.

### Summary

Given the foregoing, the embodiments of the present disclosure provide a method for displaying aerial map layers that can solve or partially solve the above-mentioned problems.

The embodiments of the present disclosure further provide a device for displaying aerial map layers to make sure the method is properly performed.

To solve the above-mentioned problems, an embodiment of the present disclosure provides a method for displaying aerial map layers applied to an aircraft comprising a map display interface.

The method comprises:
acquiring flight altitude information of the aircraft; and
displaying a corresponding map layer on the map display interface based on the flight altitude information.

In an embodiment, the aircraft is communicatively connected with a map server, and
the step of displaying the corresponding aerial map layer on the map display interface based on the flight altitude information comprises:
determining an altitude zone where the aircraft operates based on the flight altitude information; and
acquiring the corresponding aerial map layer from the map server based on the altitude zone, and displaying the corresponding aerial map layers on the map display interface.

In an embodiment, the step of acquiring the corresponding aerial map layer from the map server based on the altitude zone comprises:
determining current flight status of the aircraft; and
acquiring the corresponding aerial map layer from the map server based on the flight status and the altitude zone.

In an embodiment, the step of acquiring the corresponding aerial map layer from the map server based on the flight status and the altitude zone comprises:
when the flight status is awaiting takeoff status, acquiring an aerial map layer corresponding to a first altitude zone from the map server, and
the step of displaying the corresponding aerial map layer on the map display interface comprises:
   performing path planning using the aerial map layer corresponding to the first altitude zone to obtain a takeoff path for the aircraft; and
   displaying the takeoff path on the map display interface.

In an embodiment, the step of acquiring the corresponding aerial map layer from the map server based on the flight status and the altitude zone comprises:
when the flight status is climbing status and the aircraft reaches a preset altitude zone, determining that an altitude zone that the aircraft will enter next is a second altitude zone; and
acquiring an aerial map layer corresponding to the second altitude zone from the map server, and
the step of displaying the corresponding aerial map layer on the map display interface comprises:
   performing path planning using the aerial map layer corresponding to the second altitude zone to obtain a flight path for the aircraft; and
   displaying the flight path on the map display interface.

In an embodiment, the step of acquiring the corresponding aerial map layer from the map server based on the flight status and the altitude zone comprises:
when the flight status is descending status and the aircraft reaches a preset altitude zone, determining that an altitude zone that the aircraft will enter next is the first altitude zone;
acquiring an aerial map layer corresponding to the first altitude zone from the map server, and
the step of displaying the corresponding aerial map layer on the map display interface comprises:
   performing path planning using the aerial map layer corresponding to the first altitude zone to obtain a landing path for the aircraft; and
   displaying the landing path on the map display interface.

In an embodiment, the aerial map layer corresponding to the first altitude zone comprises a global navigation satellite system abnormal area layer, a ground network layer, a ground airflow layer, a high-definition map layer, a landing zone layer, an energy recharge station layer, a ground elevation layer, and a no-fly zone layer.

In an embodiment, the aerial map layer corresponding to the second altitude zone comprises an air route layer, an emergency landing zone layer, a weather warning layer, a landing zone layer, an energy recharge station layer, a ground elevation layer, and a no-fly zone layer.

The embodiments of the present disclosure further provide a device for displaying aerial map layers applied to an aircraft comprising a map display interface, wherein the device comprises:
a flight altitude acquisition module configured for acquiring flight altitude information of the aircraft; and
an aerial map layer display module configured for displaying a corresponding aerial map layer on the map display interface.

In an embodiment, the aircraft is communicatively connected with a map server, and the aerial map layer display module comprises:
an altitude zone determining submodule configured for determining an altitude zone where the aircraft operates based on the flight altitude information; and
an aerial map layer display submodule configured for acquiring the corresponding aerial map layer from the map server based on the altitude zone and displaying the corresponding aerial map layer on the map display interface.

In an embodiment, the aerial map layer display submodule comprises:
a flight status determining unit configured for determining current flight status of the aircraft; and
an aerial map layer acquisition unit configured for acquiring the corresponding aerial map layer from the map server based on the flight status and the altitude zone.

In an embodiment, the aerial map layer acquisition unit comprises:
a first aerial map layer acquisition subunit configured for acquiring an aerial map layer corresponding to a first altitude zone from the map server when the flight status is awaiting takeoff status, and
wherein the aerial map layer display submodule comprises:
   a takeoff path planning unit configured for performing path planning using the aerial map layer corresponding to the first altitude zone to obtain a takeoff path for the aircraft; and
   a takeoff path display unit configured for displaying the takeoff path on the map display interface.

In an embodiment, the aerial map layer acquisition unit comprises:
a second altitude zone determining subunit configured for determining that an altitude zone that the aircraft will enter next is a second altitude zone when the flight status is climbing status and the aircraft reaches the preset altitude zone; and
a second aerial map layer acquisition subunit configured for acquiring an aerial map layer corresponding to the second altitude zone from the map server, and
wherein the aerial map layer display submodule comprises:
   a flight path planning unit configured for performing path planning using the aerial map layer corresponding to the second altitude zone to obtain a flight path for the aircraft; and
   a flight path display unit configured for displaying the flight path on the map display interface.

In an embodiment, the aerial map layer acquisition unit comprises:
a third altitude zone determining subunit configured for determining that an altitude zone that the aircraft will enter next is the first altitude zone when the flight status is descending status and the aircraft reaches the preset altitude zone; and
a third aerial map layer acquisition subunit configured for acquiring the aerial map layer corresponding to the first altitude zone from the map server, and
wherein the aerial map layer display submodule comprises:
   a landing path planning unit configured for performing path planning using the aerial map layer corresponding to the first altitude zone to obtain a landing path for the aircraft; and
   a landing path display unit for displaying the landing path on the map display interface.

In an embodiment, the aerial map layer corresponding to the first altitude zone comprises a global navigation satellite system abnormal area layer, a ground network layer, a ground airflow layer, a high-definition map layer, a landing zone layer, an energy recharge station layer, a ground elevation layer, and a no-fly zone layer.

In an embodiment, the aerial map layer corresponding to the second altitude zone comprises an air route layer, an emergency landing zone layer, a weather warning layer, a landing zone layer, an energy recharge station layer, a ground elevation layer, and a no-fly zone layer.

The embodiments of the present disclosure further provide an aircraft comprising a memory and one or a more programs, wherein: the one or more programs are stored in the memory and configured to be executed by one or more processors for performing the method for displaying aerial map layers according to any embodiments of the present disclosure.

The embodiments of the present disclosure further provide a readable storage medium having stored thereon instructions which, when executed by a processor of an electronic device, cause the electronic device to perform the method for displaying aerial map layers according to any embodiments of the present disclosure.

Compared with the prior art, the present disclosure has the following benefits.

In the embodiments, the method for displaying aerial map layers is applied to an aircraft comprising a map display interface. Flight altitude information of the aircraft is first acquired, and corresponding aerial map layers are then displayed on the map display interface based on the flight altitude information. The embodiments of the present disclosure configure various flight height information corresponding to various aerial map layers depending on the nature of heights of buildings in the urban areas, achieving dynamic switching between aerial map layers for the aircraft at different flight altitudes. As a result, the map can be free of redundant and complex information, allowing for a simple map interface, thereby improving the utilization of the map information.

### Brief Description of Drawings

To illustrate the technical solutions of the embodiments of the present disclosure more clearly, the accompanying drawings needed for describing the embodiments will be explained briefly. The following accompanying drawings only describe some of the embodiments of the present disclosure, and other drawings can be obtained by those skilled in the art based on these drawings without contributing creative work.
Fig. 1 is a schematic flowchart of a method for displaying aerial map layers in accordance with an embodiment of the present disclosure;
Fig. 2 is a schematic diagram of the composition of aerial map layers in accordance with an embodiment of the present disclosure;
Fig. 3 is a schematic diagram of the switch between aerial map layers in accordance with an embodiment of the present disclosure; and
Fig. 4 is a structure block diagram of a device for displaying aerial map layers in accordance with an embodiment of the present disclosure.

### Detailed Description

The following will describe and illustrate the embodiments of the present disclosure with reference to the accompanying drawings. The embodiments described below are only a part of the embodiments of the present disclosure rather than all embodiments. Any other embodiments acquired by ordinary persons skilled in the art based on the embodiments in the present disclosure without creative work all fall within the scope of the present disclosure.

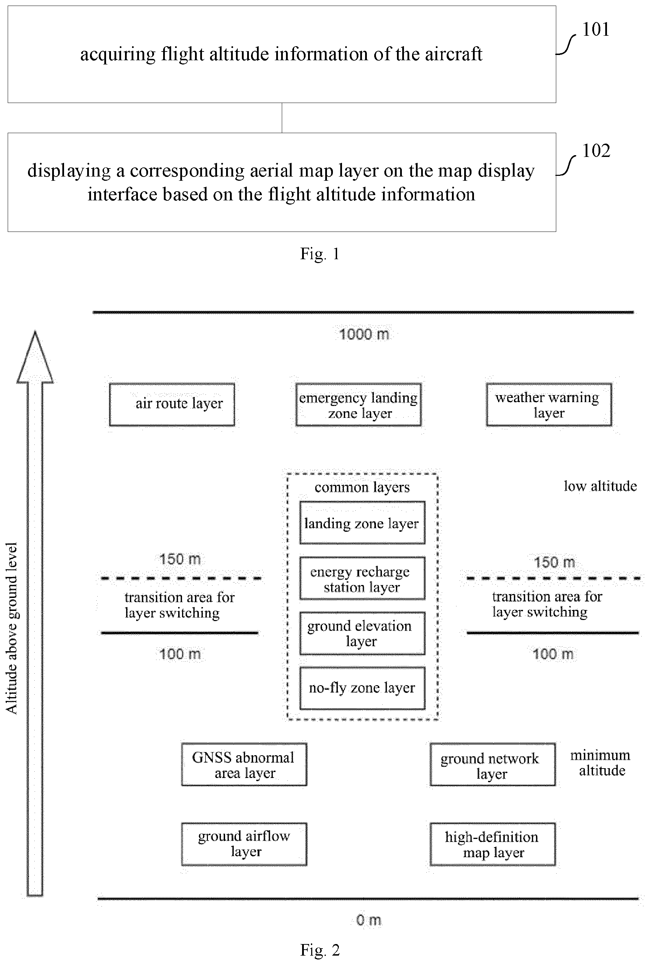

Referring to Fig. 1, Fig. 1 is a schematic flowchart of a method for displaying aerial map layers in accordance with an embodiment of the present disclosure. The method is applied to an aircraft comprising a map display interface. The method includes the following steps.

At step 101, flight altitude information of the aircraft is acquired.

In an embodiment of the present disclosure, the method can be applied to an aircraft. The aircraft may include a rotary-wing aircraft and a fixed-wing aircraft. The aircraft may be equipped with a manipulation mode selection switch, through which manipulation modes can be switched. The manipulation modes may include a land travel manipulation mode and an air travel manipulation mode. The land travel manipulation mode may be equipped with land travel manipulation components, including a steering wheel, a shift knob, a brake pedal, and an accelerator pedal, enabling the aircraft to travel on the land. The air travel manipulation mode may be equipped with air travel manipulation components, including a control lever installed rotatably and movably inside the aircraft. The aircraft can travel in the air through control of the air travel manipulation components.

Specifically, in the land travel manipulation mode, the air travel manipulation components can be configured as hidden and locked, and the land travel manipulation components can be configured as standby. In the air travel manipulation mode, the air travel manipulation components can be configured as standby and the land travel manipulation components can be configured as locked.

In an embodiment of the present disclosure, the aircraft comprises a map display interface. The aircraft can acquire the flight altitude information, and display aerial map layers on the map display interface in different forms based on the flight altitude information.

At step 102, a corresponding aerial map layers is displayed on the map display interface based on the flight altitude information.

In an embodiment of the present disclosure, the aircraft comprises the map display interface having multiple display areas. The number of display areas can be configured based on the number of aerial map layers acquired. For example, there are originally 7 display areas on the map display interface, and when the aircraft acquires 8 aerial map layers, 8 display areas will be provided replacing the 7 display areas.

In an embodiment of the present disclosure, after the flight altitude information is acquired, a corresponding aerial map layer or layers can be displayed on the map display interface based on the flight altitude information, so that different aerial map layers can be switched to at different flight phases, avoiding unnecessary layer information being loaded, thereby improving the utilization of the map information.

In an embodiment of the present disclosure, the aircraft is communicatively connected with a map server, and step 102 includes the following sub-steps: S11 and S12.

At sub-step S11, an altitude zone where the aircraft operates is determined based on the flight altitude information.

In an actual application, depending on the nature of heights of buildings in urban areas, an embodiment of the present disclosure defines the basic layer composition and conditions for switching between the layers suitable for complex urban environment for amphibious land and aerial vehicles, such as an amphibious aircraft. Specifically, according to related regulations in the construction industry, except for landmark buildings and skyscrapers, most urban buildings are lower than 100 meters in height in the embodiments of the present disclosure, altitude boundaries may be set, for example, 100 meters, 150 meters, and 1000 meters. Then, the area below 100 m is defined as a minimum altitude area, the area between 100 m and 150 m is defined as a transition area for layer switching, the area between 150 m and 1000 m is defined as a low altitude area, and the area above 1000 m is defined as a medium altitude area. Therefore, in the embodiments of the present disclosure, the altitude zone where the aircraft operates can be determined based on the flight altitude information. For example, when the flight altitude is 80 meters, the area where the aircraft operates may be determined as the minimum altitude area. In addition, values of the altitude boundaries and the altitude intervals for the areas can be set in other ways, which are not limited herein.

At sub-step S12, the corresponding aerial map layer is acquired from the map server and the corresponding aerial map layers is displayed on the map display interface based on the altitude zone.

Specifically, the aircraft can communicate with the map server through an autonomous driving system. After the altitude zone where the aircraft operates is determined, a corresponding aerial map layer or layers can be acquired from the map server, and the corresponding aerial map layer or layers can be displayed on the map display interface, thereby avoiding loading unnecessary layer information and improving the utilization of the map information.

In an embodiment of the present disclosure, aerial map layers corresponding to a first altitude zone comprise a Global Navigation Satellite System (GNSS) abnormal area layer, a ground network layer, a ground airflow layer, a high-definition map layer, a landing zone layer, an energy recharge station layer, a ground elevation layer, and a no-fly zone layer.

In an embodiment, aerial map layers corresponding to a second altitude zone comprise an air route layer, an emergency landing zone layer, a weather warning layer, a landing zone layer, an energy recharge station layer, a ground elevation layer, and a no-fly zone layer.

Referring to Fig. 2, Fig. 2 schematically shows the composition of aerial map layers in accordance with an embodiment of the present disclosure. Boundaries can be preset at 100 m, 150 m, and 1000 m altitude. The altitude zone between 0 and 100 m is the minimum altitude area, the altitude zone between 100 m and 150 m is the transition area for layer switching, and the altitude zone between 150 m and 1000 m is the low altitude area.

It should be noted that the minimum altitude area is the first altitude zone and the low altitude area is the second altitude zone. The aerial map layers corresponding to the first altitude zone (0-100 m) can comprise the GNSS abnormal area layer, the ground network layer, the ground airflow layer, the high-definition map layer. The aerial map layers corresponding to the second altitude zone (150 m-1000 m) can comprise the air route layer, the emergency landing zone layer, the weather warning layer. In addition, the first altitude zone and the second altitude zone can share common layers, including the landing zone layer, the energy recharge station layer, the ground elevation layer, and the no-fly zone layer.

To make it easier for persons skilled in the art to understand the aerial map layers corresponding to the first altitude zone and those corresponding to the second altitude zone, the aerial map layers will be described in details as follows.

The first altitude zone (i.e., the minimum altitude area) can comprise the following aerial map layers.

GNSS abnormal area layer: When the aircraft is flying in the first altitude zone, the GNSS signals are weak and a large multipath error may occur due to some large buildings blocking or reflecting the signals. In this case, in the embodiments of the present disclosure, the GNSS abnormal area layer is used to prompt the driver or provide reference information for path planning to the autonomous driving system of the aircraft. It should be noted that the GNSS can generally refer to all satellite navigation systems, it can be a complex combined system of multi-systems, multi-dimensions, and multi-modes and may include a global system, a regional system, an enhanced system, and other satellite navigation systems that are being built or to be built.

Ground network layer: The ground network layer can provide ground road network information for planning an optimal path for the aircraft from a starting point to an end point in the first altitude zone. For example, the aircraft can travel on the ground for a certain distance after the propellers are activated before taking off. In this case, the ground network layer can be applied in planning an optimal path for the aircraft from a point of departure to a point of takeoff in the first altitude zone. The ground network layer can facilitate the autonomous driving system to select an optimal landing point, which can minimize the actual distance to the final destination.

Ground airflow layer: The ground airflow layer can provide airflow information at a minimum altitude in urban areas. Because local wind gaps are easily formed between tall buildings. When the wind is strong, it is difficult for the aircraft to fly in the first altitude zone due to turbulences at the wind gaps. Therefore, in the embodiments of the present disclosure, the ground airflow layer is used to prompt the driver or provide reference information to the autonomous driving system of the aircraft for path planning.

High-definition map layer: The high-definition map layer can provide precise positioning information to guide the aircraft to land at an airport. For example, the aircraft can be guided to a certain position at the airport. The high-definition map layer can also provide precise positioning information for the aircraft to drive to the takeoff zone under autonomous driving during the takeoff phase.

The second altitude zone (the low altitude area) can comprise the following aerial map layers.

Air route layer: In the foreseeable future, the government and the practitioner in the low altitude flight industry may cooperate in promoting building air routes to enable aircrafts to fly in the second altitude zone along the air routes, thereby controlling air traffic and guaranteeing flight safety.

Emergency landing zone layer: The emergency landing zone layer can indicate a ground area for emergency landing. Electronic fences can be used to identify the emergency landing zone so that the aircraft can land in the emergency landing zone immediately when facing an emergency, thereby guaranteeing a safe landing.

Weather warning layer: The weather warning layer can be applied in planning a path for long-distance flying, avoiding potentially dangerous areas. For example, the aircraft flies from city A to city B, passing through city C or city D. If there is a rainstorm in city C while city D is sunny, in an embodiment of the present disclosure, the weather warning layer may be used to plan a path, such as path A-D-B, thereby avoiding the potentially dangerous area (city C that is undergoing a rainstorm).

The first altitude zone (the minimum altitude area) and the second altitude zone (the low altitude area) can have common layers, including the following ones.

Landing zone layer: The landing zone layer can provide information on locations of spaces for long-term or temporary parking for aircraft performing air missions, such as airports and aprons. The landing zone layer can comprise indicators for temporary parking spaces and indicators for long-term parking spaces, thereby assisting the aircraft in finding multiple landing zones.

Energy recharge station layer: The energy recharge station layer can provide information on the locations of energy recharge stations, for example, battery charging stations and gas stations.

Ground elevation layer: The ground elevation layer can provide ground elevation information with multiresolution for the autonomous driving system of the aircraft for path planning. In an embodiment, an optimal resolution of the hypsographic map can be automatically selected using the ground elevation layer based on the flight altitude. For example, when the aircraft is flying at a low altitude, ground elevation information with high resolution can be selected, so that the aircraft can avoid crashing into the ground. When the aircraft is flying at a high altitude, ground elevation information with low resolution can be selected, thereby reducing the traffic in loading high-resolution ground elevation information.

No-fly zone layer: The no-fly zone layer can provide information on no-fly zones in the air for the aircraft. Electronic fences can be used to identify the no-fly zones to prevent the aircraft from entering the no-fly zones while flying by mistake.

In an embodiment, the sub-step S12 may comprise the following sub-steps:
sub-step S121, determining current flight status of the aircraft; and
sub-step S 122, acquiring the corresponding aerial map layer from the map server based on the flight status and the altitude zone.

In actual implementation, the current flight status of the aircraft can be determined. The flight status can include one of awaiting takeoff status, climbing status, and descending status. The current flight status and the altitude zone can be used as conditions for switching layers, and a corresponding aerial map layer or layers can be acquired from the map server based on the flight status and the altitude zone.

In an embodiment of the present disclosure, sub-step S 122 can further comprise the following sub-step:
sub-step S1221, acquiring an aerial map layer corresponding to the first altitude zone from the map server when the flight status is awaiting takeoff status.

In actual implementation, the aircraft can activate the propellers via a master computer and then get ready to take off while the propellers are rotating at a high speed. At this moment, the autonomous driving system may generate a first request for map information and send it to the map server. The first request for map information can include a scope of map data and the composition of map layers. The scope of map data can be specified by the autonomous driving system based on the operation functions of the aircraft, for example, map data of a preset range with respect to the current location of the aircraft, or map data from the start position to the destination. The composition of the map layers can be the aerial map layers corresponding to the first altitude zone, for example, the GNSS abnormal area layer, the ground network layer, the ground airflow layer, the high-definition map layer, the landing zone layer, the energy recharge station layer, the ground elevation layer, and the no-fly zone layer. The map server can respond to the first request for map information and return the aerial map layers corresponding to the first altitude zone to the autonomous driving system.

In an embodiment of the present disclosure, sub-step S12 can further comprise the following sub-steps:
sub-step S 123, performing path planning using the aerial map layer corresponding to the first altitude zone to obtain a takeoff path for the aircraft; and
sub-step S124, displaying the takeoff path on the map display interface.

In an embodiment of the present disclosure, the autonomous driving system can apply the GNSS abnormal area layer, the ground network layer, the ground airflow layer, the high-definition map layer, the landing zone layer, the energy recharge station layer, the ground elevation layer, and the no-fly zone layer to perform path planning, so as to obtain a takeoff path for the aircraft, which can be displayed on the map display interface. The takeoff path can comprise the best takeoff position and evade obstacles, such as buildings, trees, street lamps, etc., thereby enabling the aircraft to take off successfully and enter the low altitude flight phase.

In an embodiment of the present disclosure, sub-step S 122 can further comprise the following sub-steps:
sub-step S 1222, determining that an altitude zone that the aircraft will enter next is the second altitude zone when the flight status is the climbing status and the aircraft reaches a preset altitude zone; and
sub-step S 1223, acquiring an aerial map layer corresponding to the second altitude zone from the map server.

In an embodiment of the present disclosure, when the aircraft is climbing and reaches the preset altitude zone, the autonomous driving system may generate a second request for map information and send it to the map server. Similarly, the second request for map information may comprise a scope of map data and the composition of map layers. The composition of the map layers can be aerial map layers corresponding to the second altitude zone, including the air route layer, the emergency landing zone layer, the weather warning layer, the landing zone layer, the energy recharge station layer, the ground elevation layer, and the no-fly zone layer. The map server can respond to the second request for map information and return the map layers corresponding to the second altitude zone to the autonomous driving system.

It should be noted that the preset altitude zone is the transition area for layer switching. As shown in Fig. 2, the transition area for layer switching may be the altitude area between 100 m and 150 m. That is, when the aircraft flies from the first altitude zone (the minimum altitude area) to the 100 m altitude boundary, the map display interface may be switched from displaying the aerial map layers corresponding to the first altitude zone to displaying the aerial map layers corresponding to the second altitude zone. As such, when the aircraft is in an area above 100 m, the GNSS abnormal area layer, the ground network layer, the ground airflow layer, and the high-definition map layer are not used, thereby avoiding loading unnecessary map information and significantly improving the utilization of the map information.

In an embodiment of the present disclosure, sub-step S12 can further comprise the following sub-steps:
sub-step S125, performing path planning using the aerial map layer corresponding to the second altitude zone to obtain a flight path for the aircraft; and
sub-step S126, displaying the flight path on the map display interface.

In an embodiment of the present disclosure, the autonomous driving system can perform path planning using the air route layer, the emergency landing zone layer, the weather warning layer, the landing zone layer, the energy recharge station layer, the ground elevation layer, and the no-fly zone layer, thereby acquiring a flight path for the aircraft that can be displayed on the map display interface. The aircraft can travel to the destination along the flight path at a low altitude.

In an embodiment of the present disclosure, sub-step S 122 can further comprise the following sub-steps:
sub-step S 1224, determining that an altitude zone that the aircraft will enter next is the first altitude zone when the flight status is the descending status and the aircraft reaches a preset altitude zone; and
sub-step S 1225, acquiring an aerial map layer corresponding to the first altitude zone from the map server.

In practice, when the aircraft is descending and reaches the preset altitude zone, the autonomous driving system may generate a third request for map information and send it to the map server. Similarly, the third request for map information may comprise a scope of map data and the composition of map layers. The composition of the map layers can be aerial map layers corresponding to the first altitude zone, including the GNSS abnormal area layer, the ground network layer, the ground airflow layer, the high-definition map layer, the landing zone layer, the energy recharge station layer, the ground elevation layer, and the no-fly zone layer. The map server can respond to the third request for map information and return the aerial map layers corresponding to the first altitude zone to the autonomous driving system.

It should be noted that the preset altitude zone is the transition area for switching layers. As shown in Fig. 2, the transition area for layer switching can be the altitude area between 100 m and 150 m. That is, when the aircraft descends from the second altitude zone (the low altitude area) to the 150 m height boundary, the map display interface may switch from displaying the aerial map layers corresponding to the second altitude zone to displaying the aerial map layers corresponding to the first altitude zone. As such, when the aircraft is in an area below 150 m, the air route layer, the emergency landing zone layer and the weather warning layer are not used, thereby avoiding loading unnecessary map information and significantly improving the utilization of the map information.

It should be noted that if the aircraft remains in the preset altitude zone (transition area for layer switching) for a long time, the autonomous driving system can acquire all aerial map layers of the aerial map, for example, the aerial map layers corresponding to the first altitude zone and the aerial map layers corresponding to the second altitude zone, and display all the aerial map layers on the map display interface. When the aircraft is out of the preset altitude zone, the autonomous driving system can discard aerial map layers not corresponding to the altitude zone where the aircraft currently operates. For example, when the aircraft leaves the preset altitude zone and enters the first altitude zone, it can discard the air route layer, the emergency landing zone layer, and the weather warning layer to avoid loading redundant map information and keep the map interface simple.

In an embodiment of the present disclosure, sub-step S12 can further comprise the following sub-steps:
sub-step S127, performing path planning using the aerial map layer corresponding to the first altitude zone to obtain a landing path for the aircraft; and
sub-step S128, displaying the landing path on the map display interface.

In practice, the autonomous driving system can perform path planning based on the GNSS abnormal area layer, the ground network layer, the ground airflow layer, the high-definition map layer, the landing zone layer, the energy recharge station layer, the ground elevation layer, and the no-fly zone layer to acquire the landing path for the aircraft, which can then be displayed on the map display interface. The aircraft can land in the minimum altitude area following the landing path.

In the embodiments of the present disclosure, the method is applied to an aircraft comprising a map display interface. Firstly, flight altitude information of the aircraft is acquired, and then the corresponding aerial map layers are displayed on the display interface based on the flight altitude information. The embodiments of the present disclosure configure different flight height information corresponding to various aerial map layers based on the nature of the height of the urban architectural complex, so that the aircraft can switch to different aerial map layers at different flight altitudes. As a result, the map can be free of redundant and complex information allowing for a simple map interface, thereby improving the utilization of the map information.

To make it easier for those skilled in the art to understand the embodiments of the present disclosure, the embodiments will be further explained by the following example.

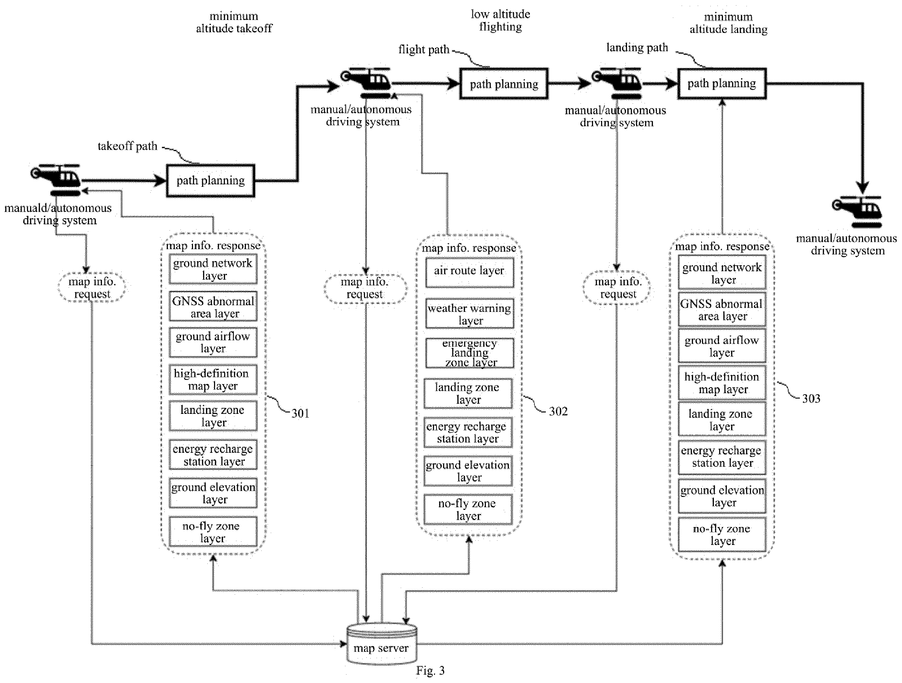

Referring to Fig. 3, Fig. 3 schematically shows the switch between aerial map layers in accordance with an embodiment of the present disclosure. The aircraft may be driven manually or autonomously , and the takeoff path, the flight path, and the landing path may be the main route. Taking an aircraft in autonomous driving mode as an example, map layer witching when the aircraft drives between the minimum altitude area (the first altitude zone) and the low altitude area (the second altitude zone) may be described as follows.
1. When the aircraft is ready to take off, the autonomous driving system sends a first request for map information to the map server.
2. The map server responds to the first request for map information and returns a first map data package 301 to the autonomous driving system, wherein the first map data package 301 can comprise the ground network layer, the GNSS abnormal area layer, the ground airflow layer, the high-definition map layer, the landing zone layer, the energy recharge station layer, the ground elevation layer, and the no-fly zone layer.
3. The autonomous driving system uses the first map data package 301 to perform path planning, to obtain a takeoff path. The aircraft takes off following the takeoff path in the minimum altitude area.
4. When the aircraft is climbing and reaches the transition area for layer switching (the preset altitude zone), the autonomous driving system sends a second request for map information to the map server.
5. The map server responds to the second request for map information and returns a second map data package 302 to the autonomous driving system, wherein the second map data package 302 can comprise the air route layer, the emergency landing zone layer, the weather warning layer, the landing zone layer, the energy recharge station layer, the ground elevation layer, and the no-fly zone layer.
6. The autonomous driving system uses the second map data package 302 to perform path planning, to obtain a flight path. The aircraft flies following the flight path in the low altitude area.
7. When the aircraft is descending and reaches the transition area for layer switching (the preset altitude zone), the autonomous driving system sends a third request for map information to the map server.
8. The map server responds to the third request for map information and returns a third map data package 303 to the autonomous driving system, wherein the third map data package 303 can comprise the ground network layer, the GNSS abnormal area layer, the ground airflow layer, the high-definition map layer, the landing zone layer, the energy recharge station layer, the ground elevation layer, and the no-fly zone layer.
9. The autonomous driving system uses the third map data package 303 to perform path planning, to obtain a landing path. The aircraft lands following the landing path in the minimum altitude area.

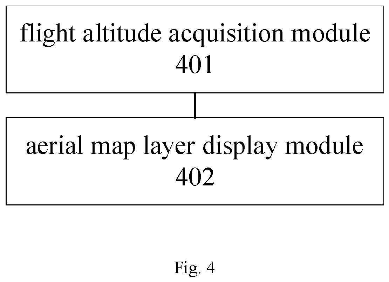

Referring to Fig. 4, Fig. 4 is a structure block diagram of a device for displaying aerial map layers in accordance with an embodiment of the present disclosure. The device is applied to an aircraft comprising a map display interface. The device can comprise the following modules:
a flight altitude acquisition module 401 configured for acquiring flight altitude information of the aircraft; and
an aerial map layer display module 402 configured for displaying a corresponding aerial map layer on the map display interface.

In an embodiment of the present disclosure, the aircraft is communicatively connected with a map server. The aerial map layer display module 402 may comprise:
an altitude zone determining submodule configured for determining an altitude zone where the aircraft operates based on the flight altitude information; and
an aerial map layer display submodule configured for acquiring the corresponding aerial map layer from the map server based on the altitude zone and displaying the corresponding aerial map layer on the map display interface.

In an embodiment of the present disclosure, the aerial map layer display submodule can comprise:
a flight status determining unit configured for determining current flight status of the aircraft; and
an aerial map layer acquisition unit configured for acquiring the corresponding aerial map layer based on the flight status and the altitude zone.

In an embodiment of the present disclosure, the aerial map layer acquisition unit can comprise:
a first aerial map layer acquisition subunit configured for acquiring an aerial map layer corresponding to a first altitude zone from the map server when the flight status of the aircraft is awaiting takeoff status.

The aerial map layer display submodule can comprise:
a takeoff path planning unit configured for performing path planning using the aerial map layer corresponding to the first altitude zone to obtain a takeoff path for the aircraft; and
a takeoff path display unit configured for displaying the takeoff path on the map display interface.

In an embodiment of the present disclosure, the aerial map layer acquisition unit can comprise:
a second altitude zone determining subunit configured for determining that an altitude zone that the aircraft will enter next is a second altitude zone when the flight status is climbing status and aircraft reaches the preset altitude zone; and
a second aerial map layer acquisition subunit configured for acquiring an aerial map layer corresponding to the second altitude zone from the map server.

The aerial map layer display submodule can comprise:
a flight path planning unit configured for performing path planning using the aerial map layer corresponding to the second altitude zone to obtain a flight path for the aircraft; and
a flight path display unit configured for displaying the flight path on the map display interface.

In an embodiment of the present disclosure, the aerial map layer acquisition unit can comprise:
a first altitude zone determining subunit configured for determining that an altitude zone that the aircraft will enter next is the first altitude zone when the flight status is descending status and the aircraft reaches the preset altitude zone; and
a third aerial map layer acquisition subunit configured for acquiring the aerial map layer corresponding to the first altitude zone from the map server.

The aerial map layer display submodule can comprise:
a landing path planning unit configured for performing path planning using the aerial map layer corresponding to the first altitude zone to obtain a landing path for the aircraft; and
a landing path display unit configured for displaying the landing path on the map display interface.

In an embodiment of the present disclosure, the aerial map layer corresponding to the first altitude zone comprises a global navigation satellite system abnormal area layer, a ground network layer, a ground airflow layer, a high-definition map layer, a landing zone layer, an energy recharge station layer, a ground elevation layer, and a no-fly zone layer.

In an embodiment, the aerial map layer corresponding to the second altitude zone comprises an air route layer, an emergency landing zone layer, a weather warning layer, a landing zone layer, an energy recharge station layer, a ground elevation layer, and a no-fly zone layer.

In an embodiment of the present disclosure, the device is applied to an aircraft comprising a map display interface. Firstly, flight altitude information of the aircraft is acquired, and then corresponding aerial map layers are displayed on the map display interface based on the flight altitude information. The embodiments of the present disclosure set up different flight height information corresponding to different aerial map layers based on the nature of heights of building in the urban area, achieving a dynamic switch between aerial map layers for the aircraft at different flight levels. As a result, the map can be free of redundant and complex information, allowing for a simple map interface, thereby improving the utilization of the map information.

The embodiments of the device are implemented in similar manners as those of the method, and thus will only be described briefly. For detailed information, reference can be made to the embodiments of the method.

The embodiments of the present disclosure further provide an aircraft comprising a memory and one or more programs, wherein the one or more programs are stored in the memory and configured to be executed by one or more processors to perform the method for displaying aerial map layers according to the embodiments of the present disclosure.

The embodiments of the present disclosure further provide a readable storage medium. When instructions in the storage medium are executed by a processor of an electronic device, the electronic device is caused to perform the method for displaying aerial map layers according to the embodiments of the present disclosure.

The embodiments of the present disclosure are described progressively. Each embodiment is only stated in terms of the key parts that are different from other embodiments. The same or similar parts in the embodiments can take each other as a reference.

The persons skilled in the art should understand that the embodiments of the present disclosure can be provided in the form of a method, a device, or a computer program product. Therefore, the embodiments of the present disclosure can be implemented as hardware, software, or a combination of hardware and software. In addition, the embodiments of the present disclosure can be implemented as a computer program product on one or more computer-readable storage medium (including a disk memory, a CD-ROM, and an optical memory, but not limited thereto) comprising computer executable program codes.

The embodiments of the present disclosure are described in connection with the flowchart and/or block diagram of the method, the terminal device (system), and the computer program product. It should be noted that each flow and/or block in the flowchart and/or block diagram, and a combination thereof can be performed through computer program instructions. The computer program instructions can be applied to a processor in a general-purpose computer, a special-purpose computer, an embedded processor, or another programmable data processing terminal device to produce a machine, such that the instructions executed by the processor of the computer or other programmable data processing terminal device produce a device for performing the specified functions of one or a plurality of flows in the flowchart and/or one or a plurality of blocks in the block diagram.

The computer program instructions can also be stored in a computer-readable storage medium that can instruct the computer or other programmable data processing terminal device to work in a specific way, enabling the instructions stored in the computer-readable storage medium to produce a product manufactured with the device including the instructions. The device including the instructions performs the specified functions of the one or a plurality of flows in the flowchart and/or the one or a plurality of blocks in the block diagram.

The computer program instructions can also be loaded into a computer or other programmable data processing terminal device to enable the computer or the programmable data processing terminal device to execute a series of steps to generate computer implemented processes, thereby executing the instructions on the computer or the programmable data processing terminal device to perform the specified functions of the one or a plurality of flows in the flowchart and/or the one or a plurality of blocks in the block diagram.

Although the present disclosure has been described in detail with reference to the above embodiments, those skilled in the art should understand that they may make modifications to the embodiments once they have acquired the basic innovative concept. Therefore, the claims are intended to be construed as comprising the embodiments of the present disclosure as well as all modifications and variants falling into the scope of the embodiments of the present disclosure.

Finally, it should be noted that the terms such as "first" and "second" are only used to distinguish an entity or an operation from other entities or operations, and they do not necessarily require or indicate any actual relationship or order between the entities or operations. In addition, the terms such as "include", "comprise", and any variants thereof aim to cover non-exclusive inclusions. Therefore, the processes, methods, articles, or terminal devices comprising a series of elements not only include the listed elements but also include other elements that are not clearly listed, or elements inherent to such processes, methods, articles, or terminal devices. Without further limitation, the expression "comprises a/an" does not exclude any other same elements in the processes, methods, articles, or terminal devices including the described element.

The embodiments of the method and device for displaying aerial map layers, the aircraft, and the readable storage medium have been described in detail. Examples are made to explain the principle and embodiments of the present disclosure, but it should be appreciated that the above description of the embodiments are only used to facilitate understanding of the core concept of the present disclosure. Those ordinary persons skilled in the art can make modifications to the specific embodiments and the scope of application thereof. Therefore, the above specification is not to be construed as limiting the present disclosure.

## Claims

1. A method for displaying aerial map layers, applied to an aircraft comprising a map display interface, **characterized by**:
acquiring flight altitude information of the aircraft; and
displaying a corresponding aerial map layer on the map display interface based on the flight altitude information, different flight altitude information corresponding to different aerial map layers.

2. The method according to claim 1, wherein:
the aircraft is communicatively connected with a map server, and
the displaying of the corresponding aerial map layer on the map display interface based on the flight altitude information comprises:
determining an altitude zone where the aircraft operates based on the flight altitude information; and
acquiring the corresponding aerial map layer from the map server based on the altitude zone, and displaying the corresponding aerial map layer on the map display interface.

3. The method according to claim 2, wherein the acquiring of the corresponding aerial map layer from the map server based on the altitude zone comprises:
determining current flight status of the aircraft; and
acquiring the corresponding aerial map layer from the map server based on the flight status and the altitude zone.

4. The method according to claim 3, wherein:
the flight status comprises awaiting takeoff status, climbing status, and descending status; and
the altitude zone comprises a preset altitude zone, wherein:
the awaiting takeoff status matches an aerial map layer corresponding to a first altitude zone, the climbing status and the preset altitude zone match an aerial map layer corresponding to a second altitude zone, and the descending status and the preset altitude zone match the aerial map layer corresponding to the first altitude zone.

5. The method according to claim 4, wherein:
the acquiring of the corresponding aerial map layer from the map server based on the flight status and the altitude zone comprises:
acquiring the aerial map layer corresponding to the first altitude zone from the map server when the flight status is the awaiting takeoff status, and
the displaying of the corresponding aerial map layer on the map display interface comprises:
performing path planning using the aerial map layer corresponding to the first altitude zone to obtain a takeoff path for the aircraft; and
displaying the takeoff path on the map display interface.

6. The method according to claim 4, wherein:
the acquiring of the corresponding aerial map layer from the map server based on the flight status and the altitude zone comprises:
determining that an altitude zone that the aircraft will enter next is the second altitude zone, when the flight status is the climbing status and the aircraft reaches the preset altitude zone; and
acquiring the aerial map layer corresponding to the second altitude zone from the map server, and
the displaying of the corresponding aerial map layer on the map display interface comprises:
performing path planning using the aerial map layer corresponding to the second altitude zone to obtain a flight path for the aircraft; and
displaying the flight path on the map display interface.

7. The method according to claim 4, wherein:
the acquiring of the corresponding aerial map layer from the map server based on the flight status and the altitude zone comprises:
determining that an altitude zone that the aircraft will enter next is the first altitude zone, when the flight status is the descending status and the aircraft reaches the preset altitude zone; and
acquiring the aerial map layer corresponding to the first altitude zone from the map server, and
the displaying of the corresponding aerial map layer on the map display interface comprises:
performing path planning using the aerial map layer corresponding to the first altitude zone to obtain a landing path for the aircraft; and
displaying the landing path on the map display interface.

8. The method according to any of claims 4-7, wherein the aerial map layer corresponding to the first altitude zone comprises one or more of: a global navigation satellite system abnormal area layer, a ground network layer, a ground airflow layer, a high-definition map layer, a landing zone layer, an energy recharge station layer, a ground elevation layer, and a no-fly zone layer.

9. The method according to any of claims 4-8, wherein the aerial map layer corresponding to the second altitude zone comprises one or more of: an air route layer, an emergency landing zone layer, a weather warning layer, a landing zone layer, an energy recharge station layer, a ground elevation layer, and a no-fly zone layer.

10. A device for displaying aerial map layers, applied to an aircraft comprising a map display interface, **characterized by**:
a flight altitude acquisition module configured for acquiring flight altitude information of the aircraft; and
an aerial map layer display module configured for displaying a corresponding aerial map layer on the map display interface based on the flight altitude information, different flight altitude information corresponding to different aerial map layers.

11. The device according to claim 10, wherein the device is configured to perform the method for displaying aerial map layers according to any of claims 2-9.

12. An aircraft comprising a memory and one or more programs, wherein the one or more programs are stored in the memory and configured to be executed by one or more processors for performing the method for displaying aerial map layers according to any of claims 1-9.

13. A readable storage medium, having stored thereon computer executable instructions which, when executed by a processor of an electronic device, cause the electronic device to perform the method for displaying aerial map layers according to any of claims 1-9.
